# EUROPÄISCHE PATENTSCHRIFT

(11) **EP 0 551 357 B1**
(45) Veröffentlichungstag und Bekanntmachung des Hinweises auf die Patenterteilung: **08.03.1995**
(21) Anmeldenummer: 91917560.4
(22) Anmeldetag: 01.10.1991
(51) Int. Cl.: A22C 13/00, C08L 67/02

(54) **Verwendung einer Polymerabmischung zur Herstellung von Folienschläuchen zur Verpackung von Fleischwaren**
Use of a polymer mixture for manufacturing a tubular foil for packaging meat products
Usage d'un mélange de polymères pour la fabrication d'une pellicule tubulaire d'emballage de produits de boucherie

(30) Priorität: 04.10.1990 DE 4031389
(43) Veröffentlichungstag der Anmeldung: 21.07.1993
(73) Patentinhaber: EUROPLAST H. MUDDER GMBH, D-49076 Osnabrück (DE)
(72) Erfinder: MUDDER, Hans, D-4531 Lotte 1 (DE)
(74) Vertreter: Meyers, Hans-Wilhelm, Dr.Dipl.-Chem.
(86) Internationale Anmeldenummer: EP9101875
(87) Internationale Veröffentlichungsnummer: WO9205702

(56) Entgegenhaltungen:
- EP-A- 176 980
- EP-A- 238 197
- EP-A- 325 151
- WO-A-87/03452
- DE-A- 3 426 723
- FR-A- 2 441 558
- GB-A- 1 163 248

## Beschreibung

Gegenstand der vorliegenden Erfindung ist eine Verwendung gemäß Anspruch 1.

Die DE-A-26 22 858 betrifft Gemische von elastomeren Copolyestern und Ethylen-Carbonsäure-Copolymerisaten. Insbesondere werden als Copolyester 1,4-Butandiol und Terephthalsäure verwendet. Es werden 0,2 bis 20 Gew.-% eines Copolymerisats, das polymerisierte Ethyleneinheiten und polymerisierte Carbonsäureeinheiten enthält, verwendet. Die Carbonsäureeinheiten können dabei zu 0 % bis 100 % Metallionen als Gegenionen aufweisen. Die Komponenten werden in Mengen von 500:1 bis 4:1 eingesetzt.
Daraus wird erkennbar, daß die Polyesterkomponente stets im hohen Überschuß zugegeben sein muß. Aus den dort beschriebenen Polymermassen werden Schlauchfolien und Folien gefertigt.

Die DE-A-38 31 243 betrifft schlagzähe Polyester- und Polyamidformmassen mit einer relativ komplizierten Compoundierung mit fünf verschiedenen Komponenten.

Die DE-A-24 19 968 betrifft zähe, wärmealterungsbeständige und verarbeitungsstabile Polybutylenterephthalat-Formmassen, die als Spritzgußmassen verwendet werden. Diesen Massen werden gegebenenfalls Copolymerisate aus Ethylen/Acrylsäure und/oder Ethylen/Acrylsäuremethylester beigemischt.

Die EP-A-0 238 197 betrifft Polymermischungen mit Sperreigenschaften. Offenbart werden Polymermischungen aus Polyester und einer zweiten Komponente, die ein Polymer mit polaren Gruppen wie Carboxylgruppen enthält. Ionomere werden dort nicht beschrieben.

Die GB-1,351,973 betrifft ein Verfahren und eine Vorrichtung zur Herstellung schlauchförmiger Filme, wobei die Schläuche in der Lage sind, in longitudinaler Richtung zu schrumpfen ohne Änderung des internen Durchmessers. Als Polymere, die den dort beschriebenen Anforderungen entsprechen, kommen thermoplastische Materialien, wie Polyolefine, lineare Polyester, wie Terephthalsäure, Polyamide und Copolyamide verschiedener polyamidformenden Komponenten in Frage.

Aus dem Prospekt "SURLYN" der Firma Du Pont ist bekannt, für die Verpackung von Fleischwaren in Folien Verbundfolien aus Ethylen-Methacrylsäure-Copolymerisaten sowie Polyamid oder Polyester zu verwenden. Verbundfolien sind jedoch relativ aufwendig herzustellen. Dies gilt auch für die Herstellung von Folienschläuchen. Bisher verwendete Monofilme erreichen jedoch nicht die Vorteile der Verbundfolien hinsichtlich Wasserdampfsperre und Sauerstoffsperre.

Die DE 34 26 723 betrifft eine gerade oder gekrümmte, räucherbare, thermoplastische Kunststoffhülle für Lebensmittel, insbesondere Fleischwaren wie Koch- oder Brühwurst oder Käsewurst, die nach dem Umhüllen während des Fertigungsprozesses erhitzt oder im heißen, schmelzflüssigen Zustand umhüllt werden. Die Hülle besteht aus einem thermoplastischen Kunststoff, der bis zur Sättigung mindestens 3 %, bevorzugt mindestens 5 %, seines Gewichts an Wasser aufnehmen kann. Beschrieben werden ferner die Anwendung dieser Hülle zum Räuchern von darin abgepackten Lebensmitteln sowie die geräucherten Lebensmittel.

Der vorliegenden Erfindung liegt somit das technische Problem zugrunde, Folienschläuche aus Monofilmen bereitzustellen, in denen Fleischwaren aufgenommen werden können, wobei die Folienschläuche gute Wasserdampf- und Sauerstoffsperreigenschaften sowie Maschinengängigkeit aufweisen. Insbesondere sollen die Wasserdampf- und Sauerstoffsperreigenschaften der Monofilmfolien verbessert werden.

Das der Erfindung zugrundeliegende technische Problem wird gelöst durch eine Verwendung einer Polymerabmischung aus Polybutylenterephthalat als Komponente (A) und Ethylensäurecopolymerisat oder Ionomere bzw. Mischungen von beiden als Komponente (B), wobei das Gewichtsverhältnis der Komponente (A) zu Komponente (B) 1:1 bis 5:1 beträgt, zur Herstellung von Folienschläuchen zur Verpackung von Fleischwaren.

Vorzugsweise beträgt das Gewichtsverhältnis der Komponente (A) zu Komponente (B) der Polymermasse 2:1 bis 4:1.

Sollen die Folienschläuche eingefärbt werden, können Farbpigmente der Mischung der Polymermasse zugemischt werden, zum Beispiel, um die optischen Eigenschaften zu verbessern. Als Träger für die Farbpigmente kommen handelsübliche und mit den Komponenten (A) und (B) verträgliche Kunststoffe in Frage, zum Beispiel Polybutylentherephtalat, Polyethylen, Polyamid, Ionomere usw. Die aus den gefärbten Polymermassen herzustellenden Verpackungsmaterialien können auch zur Unterscheidung der darin verpackten Waren dienen. Als Polyamid werden vorzugsweise handelsübliche Polyamide, wie Polyamid 6, 6.6, CO-Polyamide 6.66, 6.9 und 6.12 verwendet. Vorzugsweise werden bis zu 5 Gew.-% Farbpigmente enthaltende Massen zugemischt.

Vorzugsweise werden solche Ethylensäure-Copolymerisate verwendet, die aus Ethylen-Methacrylsäure bzw. Acrylsäure oder Ethylen- und Methacrylsäure bzw. Arcylsäure und Ester oder Ionomeren aus diesen Ethylen-Copymerisaten, die teilweise durch Natrium oder Zinkionen vernetzt sind, bestehen.

Somit weisen erfindungsgemäß bevorzugt verwendbare Folienschläuche Zink- und/oder Natriumionen als Gegenionen des Ethylen-Methacrylsäure-Copolymerisats auf.

In vorteilhafter Weise wird als Polyesterkomponente Polybutylenterephthalat mit einem E-Modul von 500 bis 3.000 N/mm² verwendet.

Die erfindungsgemäße Verwendung Folienschläuche zeigt sich in hervorragender Weise in ihrer Eignung zur Verpackung von Fleischwaren. Insbesondere vorteilhaft ist die erfindungsgemäße Verwendung der Folienschläuche zur Verpackung von Würsten. Die Folienschläuche, in ihrer erfindungsgemäße Verwendung als Kunstdärme, weisen für einen Monofilm hervorragende Wasserdampf- und Sauerstoffsperreigenschaften sowie ausgezeichnete Maschinengängigkeit auf. Die Verbesserung der Wasserdampfsperreigenschaften beträgt 25 bis 30 %. Dieser Wert beträgt, gemessen nach DIN 53122/23°C - 85 % RF 2 bis 2,5 g/m² d, während das Polybutylenterephthalat allein einen um ca. 25 % bis 30 % höheren Wert von ca. 2,5 bis 3,5 g/m² d aufweist. Ein ähnliches Bild ergibt sich bezüglich der Verbesserung der Sperreigenschaften bezüglich Sauerstoffpermeation. So weisen die erfindungsgemäß verwendbaren Folienschläuche eine Sauerstoffpermeation von 12 bis 15 cm³ pro m² d bar auf, während solche aus Polyethylenterephthalat einen Wert von 15 bis 20 cm³ pro m² aufweisen. Auch die optischen Eigenschaften der so hergestellten Folienschläuche, insbesondere Kunstdärme sind ausgezeichnet.

Aufgrund der hervorragenden Sauerstoff- und WasserdampfSperreigenschaften bleiben die in den Folienschläuchen verpackten Fleischwaren längere Zeit in ansehnlicher Form. Durch die Sauerstoffsperre wird die Vergrauung der Wurstware verhindert. Die Wasserdampfsperre sorgt dafür, daß Gewichtsverluste bei längerer Lagerzeit verhindert werden. Insgesamt wird eine bessere Verkaufsoptik erreicht, was zur besseren Verkäuflichkeit der Fleischwaren, insbesondere Wurstwaren, auch nach längerer Lagerzeit führt.

## Patentansprüche

1. Verwendung einer Polymerabmischung aus Polybutylenterephthalat als Komponente (A) und Ethylensäurecopolymerisat oder Ionomere bzw. Mischungen von beiden als Komponente (B), wobei das Gewichtsverhältnis der Komponente (A) zu Komponente (B) 1:1 bis 5:1 beträgt, zur Herstellung von Folienschläuchen zur Verpackung von Fleischwaren.

2. Verwendung nach Anspruch 1, wobei das Gewichtsverhältnis von Komponente (A) zu Komponente (B) der Polymermasse 2:1 bis 4:1 beträgt.

3. Verwendung nach mindestens einem der Ansprüche 1 und/oder 2, dadurch gekennzeichnet, daß zusätzlich bis zu 5 Gew.-% Farbpigmente enthaltende Massen der Polymermasse zugesetzt sind.

4. Verwendung nach Anspruch 3, wobei die Massen, denen die Farbpigmente zugesetzt sind, aus Polybutylenterephthalat, Polyethylen, Polyamid und/oder Ionomeren bestehen.

5. Verwendung nach mindestens einem der Ansprüche 1 bis 4, dadurch gekennzeichnet, daß Ethylensäure-Copolymerisate in der Polymermasse verwendet werden, die aus Ethylen-Methacrylsäure bzw. Acrylsäure oder Ethylen- und Methacrylsäure bzw. Arcylsäure und Ester oder Ionomeren aus diesen Ethylen-Copymerisaten, die teilweise durch Natrium oder Zinkionen vernetzt sind, bestehen.

6. Verwendung nach mindestens einem der Ansprüche 1 bis 5, dadurch gekennzeichnet, daß das Polybutylenterephtalat als Komponente (A) einen E-Modul von 500 bis 3.000 N/mm² aufweist.

## Claims

1. The use of a polymer blend of polybutylene terephthalate as component (A) and ethylene/acid copolymerisate or ionomers or mixtures of the two as component (B) wherein the weight ratio of component (A) to component (B) is from 1:1 to 5:1 to prepare blown film tubings for the packaging of meats.

2. The use according to claim 1, wherein the weight ratio of component (A) to component (B) of the polymer mass is from 2:1 to 4:1.

3. The use according to any of claims 1 or 2, characterized in that additionly up to 5% by weight of masses containing color pigments are added to the polymer mass.

4. The use according to claim 3, wherein the masses to which the color pigments are added consist of polybutylene terephthalate, polyethylene, polyamide and/or ionomers.

5. The use according to any of claims 1 to 4, characterized in that ethylene acid copolymerisates are used in the polymer mass which copolymerisates consist of ethylene methacrylic acid, or ethylene acrylic acid, respectively, or else of ethylene methacrylic acid, or ethylene acrylic acid, respectively, and esters or ionomers of these ethylene copolymerisates which are partially cross-linked by sodium or zinc ions.

6. The use according to any of claims 1 to 5, characterized in that said polybutylene terephthalate as the component (A) has a modulus of elasticity of from 500 to 3,000 N/mm².

## Revendications

1. Utilisation d'un mélange de polymères constitué de téréphtalate de polybutylène, constituant un composant (A), et d'un copolymère d'acide éthylénique ou d'ionomères ou de mélanges des deux, constituant un composant (B), le rapport pondéral du composant (A) au composant (B) étant de 1:1 à 5:1, pour la fabrication de gaines en feuille pour l'emballage de la viande.

2. Utilisation selon la revendication 1, dans laquelle le rapport pondéral du composant (A) au composant (B) de la masse polymère est de 2:1 à 4:1.

3. Utilisation selon au moins une des revendications 1 et/ou 2, caractérisée en ce qu'on ajoute, en outre, jusqu'à 5 % en poids de masses contenant des pigments colorés à la masse polymère.

4. Utilisation selon la revendication 3, dans laquelle les masses auxquelles on a ajouté les pigments colorés sont constituées de téréphtalate de polybutylène, de polyéthylène, de polyamide et/ou d'ionomères.

5. Utilisation selon au moins une des revendications 1 à 4, caractérisée en ce qu'on utilise, dans la masse polymère, des copolymères d'acide éthylénique qui sont constitués d'éthylène-acide méthacrylique ou acide acrylique, ou d'acide éthylénique-acide méthacrylique ou acide acrylique, et des esters ou des ionomères de ces copolymères éthyléniques, qui sont partiellement réticulés par le sodium ou par des ions zinc.

6. Utilisation selon au moins une des revendications 1 à 5, caractérisée en ce que le téréphtalate de polybutylène, constituant le composant (A), a un module d'élasticité de 500 à 3 000 N/mm².
